(19) Europäisches Patentamt

European Patent Office

Office européen des brevets

(11) **EP 1 737 243 A2**

(12) **EUROPEAN PATENT APPLICATION**

(43) Date of publication:
27.12.2006 Bulletin 2006/52

(51) Int Cl.:
*H04N 7/46* (2006.01)    *H04N 7/26* (2006.01)
*H04N 7/50* (2006.01)

(21) Application number: 06253231.2

(22) Date of filing: 22.06.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 24.06.2005 KR 20050055041

(71) Applicant: Samsung Electronics Co., Ltd.
Suwon-si, Gyeonggi-Do (KR)

(72) Inventors:
• **Lee, Kyo-hyuk**
**Dongjak-gu**
**Seoul (KR)**

• **Han, Woo-jin,**
**No. 108-703 Jugong 2-danji Apt.**
**Suwon-si**
**Gyeonggi-do (KR)**
• **Lee, Bae-keun**
**Gyeonggi-do (KR)**

(74) Representative: **Brandon, Paul Laurence et al**
**APPLEYARD LEES**
**15 Clare Road**
**Halifax HX1 2HY (GB)**

(54) **Video coding method and apparatus using multi-layer based weighted prediction**

(57) A method and apparatus for efficiently encoding a plurality of layers using inter-layer information in a multi-layer based video codec are disclosed. The video encoding method includes operations of reading the weighting factors of one layer; performing motion compensation on reference frames for the current frame based on a motion vector; generating a predicted frame for the current frame by acquiring a weighted sum of the motion-compensated reference frames using the read weighting factors; and encoding the difference between the current frame and the predicted frame.

**FIG. 3**

EP 1 737 243 A2

## Description

The present invention relates to video coding methods and apparatus.

As information and communication technology, including the Internet, develops, image-based communication, as well as text-based communication and voice-based communication, is increasing. The existing text-based communication is insufficient to satisfy consumers' various demands. Therefore, the provision of multimedia services capable of accommodating various types of information, such as text, images and music is increasing. Since the size of multimedia data is large, it requires high-capacity storage media and broad bandwidths at the time of transmission. For example, a 24-bit true color image having a resolution of $640 \times 480$ requires a $640 \times 480 \times 24$ bits per frame, that is, about 7.37 Mbits of data. In order to transmit such images at a rate of 30 frames per second, a bandwidth of 221 Mbits/sec is required. Furthermore, in order to store a 90 min. movie, a storage space of about 1,200 Gbits is required. Therefore, in order to transmit multimedia data, including text, images and audio, the use of a compression coding technique is essential.

The fundamental principle of data compression is to eliminate redundancy in data. Data can be compressed by eliminating spatial redundancy, such as a case where an identical color or object is repeated in an image, temporal redundancy, such as a case where there is little change between neighboring frames or an identical sound is repeated, or psychovisual redundancy, which takes into account human visual and aural insensitivity to high frequencies. Data compression can be classified into lossy/lossless compression, intra-frame/inter-frame compression, or symmetric/asymmetric compression, depending respectively on whether source data is lost, whether compression is independently performed for respective frames, and whether compression and decompression require the same amount of time. With respect to this, the case where the compression-decompression delay time does not exceed 50 ms is classified as real-time compression, and the case where the resolutions of frames arc variable is classified as scalable compression. For text data and medical data, lossless compression is mainly employed, and for multimedia data, lossy compression is mainly employed. In order to eliminate spatial redundancy, intra-frame compression is employed, and in order to eliminate temporal redundancy, inter-frame compression is employed.

Performance differs according to the transmission medium. Currently used transmission media have various transmission speeds ranging from the speed of an ultra high-speed communication network, which can transmit data at a transmission rate of several tens of megabits per second, to the speed of a mobile communication network, which can transmit data at a transmission rate of 384 Kbits per second. Conventional video coding schemes, such a.s Motion Picture Experts Group (MPEG)-1, MPEG-2, H.263 and H.264, eliminate temporal redundancy using motion compensation, and spatial redundancy using transform coding on the basis of a motion compensation prediction method. These schemes attain desired compression rates, but have no flexibility for a true scalable bitstream because the principal algorithms use a recursive approach. Accordingly, recently, research on wavelet-based scalable video coding is actively being carried out. Scalable video coding refers to a video coding technique that is scalable. Scalability refers to a characteristic in which partial decoding, that is, the playing of various pieces of video, can be performed from a single compressed bitstream. The concept scalability includes spatial scalability, capable of adjusting the resolution of video, Signal-to-Noise Ratio (SNR) scalability, capable of adjusting the quality of video, temporal scalability, capable of adjusting frame rate, and combinations thereof.

The Joint Video Team (JVT), that is, a joint group of the MPEG and the international Telecommunication Union (ITU), is standardizing H.264 Scalable Extension (H.264 SE), H.264 is characterized in that it basically adopts most H.264-based coding techniques without change but uses inter-layer relevance in order to code a plurality of layers. A plurality of layers has differences in resolution, frame rate, or SNR, but bas considerable similarity in that the layers are created from the same source. Accordingly, various techniques for efficiently utilizing information about a lower layer when coding the data of an upper layer are being proposed.

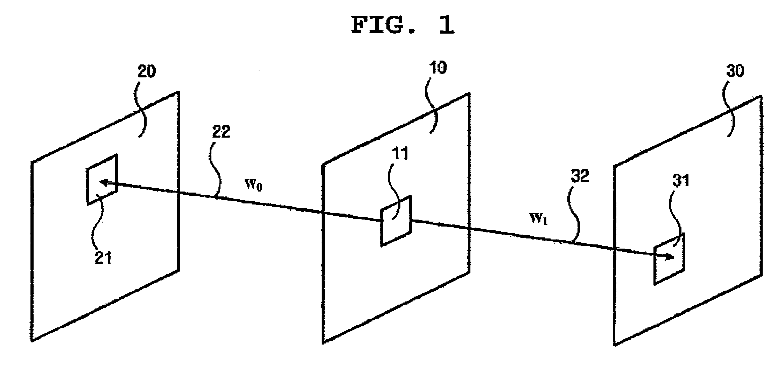

FIG. 1 is a view illustrating the weighted prediction proposed in the existing H.264 standard. Weighted prediction refers to a technology for increasing the prediction efficiency by appropriately scaling reference frames, rather than simply averaging reference frames.

A motion block 11 (a macroblock or sub-macroblock to which a motion vector is assigned) within a current frame 10 corresponds to an image 21 of a left reference frame 20 through a forward motion vector 22, and corresponds to an image 31 of a right reference frame 30 through a backward motion vector 32. After obtaining a predicted image from the images 21 and 31, an encoder reduces the amount of data required for the motion block 11 by subtracting the predicted image from the motion block 11.

When weighted prediction is not utilized, a predicted image is obtained simply by averaging the images 21 and 31. However, in general, the motion vector block 11 does not coincide with the average of the left image 21 and the right image 31, so that it is impossible to obtain an accurate predicted image, Accordingly, in H.264, weighting factors $w_0$ and $w_1$ are determined on a slice basis and a final result obtained by multiplying the images 21 and 31 by the weighting factors $w_0$ and $w_1$ and adding the results is used as a predicted image. The slice may be composed of a plurality of macroblocks, or may correspond to a frame. A plurality of slices may construct a single frame. Here, a predicted image having a very small difference with the motion block 11 can be obtained by adjusting the weighting factors $w_0$ and $w_1$, and the coding efficiency can be improved by subtracting the predicted image from the motion block 11.

The weighted prediction of H.264 is very effective, but is applied only to simple single-layer coding. Research into how to apply the weighted prediction to multi-layer based scalable video coding is not currently being carried out.

An aim of preferred embodiments of the present invention is to provide a method and apparatus for performing weighted prediction for one layer using weighting factors, which are used when weighted prediction is performed for another layer, in a multi-layer based video codec.

According to an aspect of the present invention, there is provided a video encoding method of performing weighted prediction on the current image of a first layer using at least one weighting factor of a corresponding image in a second layer, the video encoding method comprising operations of (a) reading the at least one weighting factor; (b) performing motion compensation on at least one reference image for the current image based on a corresponding motion vector; (c) generating a predicted image for the current image by acquiring a. weighted sum of the at least one motion-compensated reference image using the at least one weighting factor; and (d) encoding a difference between the current image and the predicted image.

According to an aspect of the present invention, there is provided a video decoding method of performing weighted prediction on a current image of a first layer using at least one weighting factor of a corresponding image in a second layer, the video decoding method comprising operations of (a) extracting texture data of the current image in the first layer, at least one motion vector and at least one weighting factor from an input bit stream; (b) performing motion compensation on at least one reference image for the current image based on a corresponding motion vector among the at least one motion vector; (c) generating a predicted image for the current image by acquiring a weighted sum of the at least one motion-compensated reference image using the at least one weighting factor; and (d) adding the texture data of the current image and the predicted image.

According to an aspect of the present invention, there is provided a video encoder including a motion estimation unit which acquires at least one motion vector by performing motion estimation on a current image of a first layer with reference to at least one reference image at a temporal location different from that of the current image; a motion compensation unit which performs motion compensation on the at least one reference image using the at least one motion vector; a weighted prediction unit which generates a predicted image for the current image by acquiring a weighted sum of the at least one motion-compensated reference image using at least one weighting factor which is used for encoding a temporally corresponding image in a second layer; and a unit which encodes the difference between the current image and the predicted image.

According to an aspect of the present invention, there is provided a video decoder including an entropy decoding unit which extracts the texture data of a current image of a first layer, at least one motion vector and at least one weighting factor of a temporally corresponding image in a second layer from an input bit stream; a motion compensation unit which performs motion compensation on at least one reference image for the current image using at least one motion vector; a weighted prediction unit which generates a predicted image for the current image by acquiring a weighted sum of the at least one motion-compensated reference image using the at least one weighting factor; and an adder which adds the texture data of the current image and the prediction image.

Further features of the present invention are set out in the appended claims.

The present invention will be more clearly understood from the following detailed description, by way of example only, taken in conjunction with the accompanying drawings, in which:

FIG. 1 is a view illustrating the weighted prediction proposed in the existing H.264 standard;
FIG. 2 is a flowchart illustrating a multi-layer based weighted prediction method according to an exemplary embodiment of the present invention;
FIG. 3 is a flowchart illustrating the detailed operations of operation S50 of FIG. 2 according to an exemplary embodiment of me present invention;
FIG. 4 is a view, according to an exemplary embodiment of the present invention, illustrating a multi-layer based video structure in which the resolution of an upper layer frame is twice the resolution of a lower layer frame, and the frame rates of both layers are the same;
FIG. 5 is a view, according to an exemplary embodiment of the present invention, illustrating a multi-layer based video structure in which both an upper layer and a lower layer have the MCTF structure;
FIG. 6 is a view, according to an exemplary embodiment of the present invention, illustrating a multi-layer based video structure in which both an upper layer and a lower layer have the hierarchical B structure;
FIG. 7 is a view, according to an exemplary embodiment of the present invention, illustrating a multi-layer based video structure in which an upper layer has the MCTF structure and a lower layer has a hierarchical B structure;
FIG. 8 is a view, according to an exemplary embodiment of the present invention, illustrating a multi-layer based video structure, in which the frame rates of both layers are the same, and the frames have a variety of reference methods;

FIG. 9 is a block diagram showing the construction of a video encoder according to an exemplary embodiment of the present invention;

FIG. 10 is a block diagram showing the construction of a video decoder according to an exemplary embodiment of the present invention; and

FIG. 11 is a diagram illustrating the construction of a system for implementing a video encoder or a video decoder according to an exemplary embodiment of the present invention.

Exemplary embodiments of the present invention are described in detail below with reference to the accompanying drawings.

A predicted image (predPart) based on the weighted prediction of H.264 can be calculated using the following Equation 1. $predPartL0$ refers to the corresponding image of a left reference frame and $predPartL1$ refers to the corresponding image of a right reference frame.

$$predPart = w_0 \times predPartL0 + w_1 \times predPartL1 \qquad (1)$$

The weighted prediction includes explicit weighted prediction and implicit weighted prediction.

In the explicit weighted prediction, weighting factors $w_0$ and $w_1$ are estimated by an encoder, and are included in a slice header and transmitted to a decoder. In the implicit weighted prediction, the weighting factors $w_0$ and $w_1$ are not transmitted to a decoder. Instead, the decoder estimates the weighting factors $w_0$ and $w_1$ based on the relative temporal locations of a reference frame $L0$ (List 0) and a reference frame $L1$ (List 1). In this case, $L0$ refers to a forward reference frame (a temporally preceding reference frame), while $L1$ refers to a backward reference frame (a temporally following reference frame).

In H.264, slice types, such as an I slice type, a P slice type and a B slice type, exist. Explicit weighted prediction can be used for P slices, and both the explicit weighted prediction and the implicit weighted prediction can be used for B slices. As a result, three types may exist.

One or more weighting factors are assigned default values. Accordingly, in a mode in which weighted prediction is not used, the default values are used. In bidirectional reference (B slice type), the default values of $w_0$ and $w_1$ are 1/2 (simple mean). In unidirectional reference (P and SP slice types), the default value of $w_0$ or $w_1$ is 1.

The three types of weighted prediction used in H.264 are described below. First, the explicit weighted prediction for the P slice type is performed when the weighted_pred_flag is 1, and the type of reference is a unidirectional reference. In this case, a prediction image can be obtained using the following Equation 2.

$$predPart = w_x \times predPartLx$$
$$where\ x\ is\ 0\ or\ 1 \qquad (2)$$

Information about a prediction factor $w_x$ is encoded in the slice header of a bit stream and is then transmitted to a decoder.

Second, the explicit weighted prediction for the B slice type is performed when weighted_bipred_flag is 1 and the type of reference is a bidirectional reference. In this case, a prediction image can be obtained using the above Equation 1. Information about $w_0$ and $w_1$ is encoded in the slice header of the bit stream and is then transmitted to the decoder.

Third, the implicit weighted prediction for the B slice type is performed when the wcightcd_bipred_flag is 2 and the type of reference is a bidirectional reference, In this case, information about $w_0$ and $w_1$ is not transmitted to the decoder, but is estimated and generated by the weighted prediction process of the H,264 decoder. The weighted prediction process is designed in consideration of the temporal distance of a reference frame.

The advantage of implicit prediction over explicit prediction is that overhead is not generated because it is not necessary to record separate information about weighted prediction in the bit stream. However, implicit prediction is not advantageous in that the quality of a restored frame may be degraded because the $w_0$ and $w_1$ estimated in the decoder are not identical to the $w_0$ and $w_1$ calculated in the encoder.

The present invention proposes a method of performing weighted prediction on an upper layer by applying the weighting factors of a lower layer to the upper layer without change in the multi-layer video codec. The Joint Video Team (JVT) adopts the Joint Scalable Video Model (JSVM) in its working draft. The lower layer of the JSVM, is compatible with H.264. Therefore, in order to apply the present invention to the JSVM, it is preferable, but not necessary, that the lower layer be encoded in accordance with H.264. However, the present invention is not limited thereto, but can be applied to the case where a weighting factor is used in the lower layer.

Weighted prediction worlcs very efficiently in a fade-in or fade-out video sequence. If the fade-in or fade-out video sequence is encoded by a multi-layer based codec in the same manner as in the JSVM, it is expected that the weighting factors of the upper layer will be similar to those of the lower layer. Meanwhile, in the case of residual prediction, it will be more appropriate to apply the same weighted prediction to a slice having a corresponding lower layer slice. Residual prediction is a method of further enhancing the encoding efficiency by subtracting a residual signal, generated through temporal prediction in an upper layer, and a residual signal, generated through temporal prediction in a lower layer and located at the same temporal location as the former residual signal, from each other. Residual prediction is included in the JSVM.

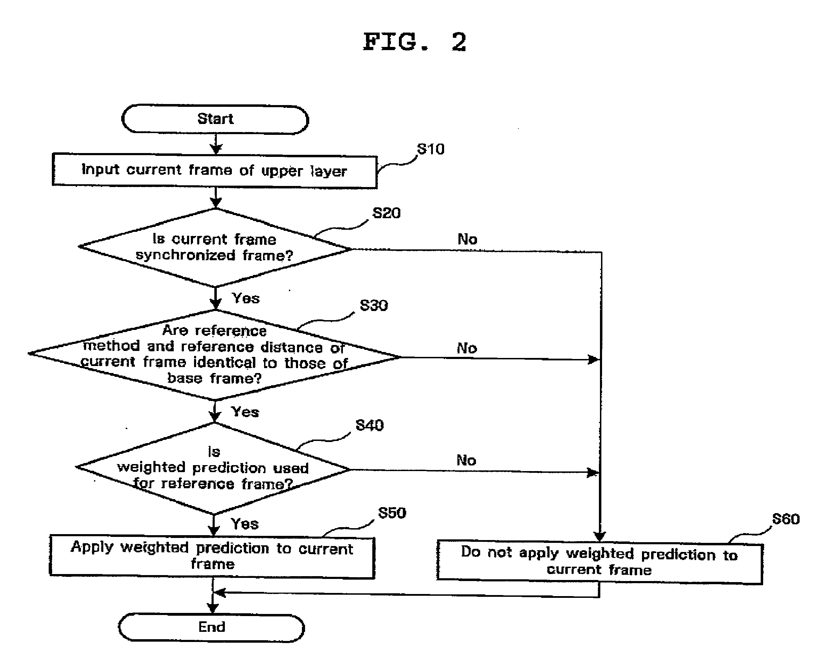

FIG. 2 is a flowchart illustrating a multi-layer based weighted prediction method according to an exemplary embodiment of the present invention. If a current frame of an upper layer is input in operation S10, the encoder determines whether the current frame is a synchronized frame in operation S20. In the present invention, the term "synchronized frame" refers to a frame, in an upper layer having a corresponding frame in a lower layer, that is, a frame having the same temporal location (hereinafter referred to as "base frame"). Therefore, the term. "non-synchronized frame" refers to a frame in an upper layer that does not have a corresponding frame in a lower layer. Whether the temporal location is the same can be determined depending on whether the Picture Order Count (POC) defined in the JSVM is the same.

If, as a result of the determination in operation S20, the current frame is determined to be a synchronized frame (YES in operation S20), the encoder determines whether the reference method and reference distance of the current frame are respectively the same as those of a base frame in operation S30. The reference method may include forward reference, backward reference, bidirectional reference and multiple reference. Furthermore, the reference distance refers to the temporal distance between a frame to which reference will be made and a reference frame. In the JSVM, the temporal distance can be expressed as a difference between the POC of a frame to which reference will be made and the POC of the reference frame.

If, as a result of the determination in operation S30, the reference method and reference distance of the current frame are determined to be the same as those of the base frame (YES in operation S30), the encoder determines whether weighted prediction is used for the base frame in operation S40. According to the JSVM, whether the weighted prediction is used for the base frame can be determined by examining the weighted_pred_flag or weightcd_bipred_flag of the base frame (or the base slice).

As described above, in the case where the base slice is a P sli.ce, the case where (explicit) weighted prediction is used is indicated when the value of weighted_pred_flag is 1, whereas the case where weighted prediction is not used is indicated when the value of weighted_pred_flag is 0. Furthermore, in the case where the base slice is a B slice, the case where weighted prediction is not used is indicated when the value of weighted_bipred_flag is 0, whereas the case where (explicit) weighted prediction is used is indicated when the value of weighted_pred_flag is 1, and the case where (implicit) weighted prediction is used is indicated when the value of weighted_bipred_flag is 1.

If, as a result of the determination in operation S40, the proposed weighted prediction(hereinafter, inter-layer weighted prediction) is determined to be used for the base frame (YES in operation S40), the encoder applies weighted prediction to the current frame in operation S50.

Meanwhile, if the current frame is a non-synchronized frame (.NO in operation S20), the reference method of the current frame is different from that of the base frame (NO in operation S30) or weighted prediction is not used for the base frame (NO in operation S40), weighted prediction is not applied to the current frame in operation S60 or the conventional weighted prediction (implicit weighted prediction, explicit weighted prediction, ctc.) is applied to the current frame.

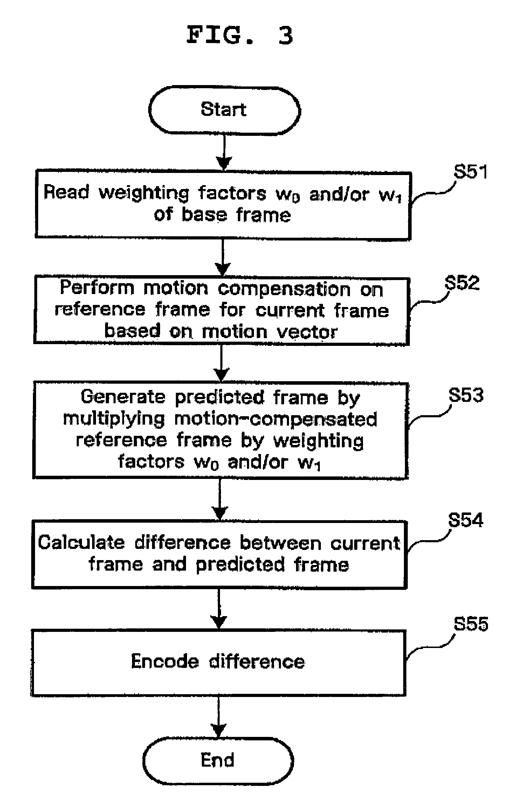

FIG. 3 is a flowchart illustrating the detailed operations of operation S50 of FIG. 2 according to an exemplary embodiment of the present invention.

The encoder first reads a weighting factor $w_0$ and/or $w_1$ of the base frame in operation S51. Even though the encoder can read the weighting factor from the slice header, it reads a parameter type of the weighting factor that was previously stored in a memory before being recorded in the slice header. Thereafter, the encoder performs motion compensation on the reference frame for the current frame using a motion vector in operation S52. In the motion compensation process, a motion vector estimated through a motion estimation process is used. When there is a plurality of reference frames, motion compensation must be performed on each of the respective frames using a corresponding motion vector.

Furthermore, the encoder multiplies the motion-compensated reference frame by the weighting factor $w_0$ and/or $w_1$ and adds the reference frame, which is multiplied by the weighting factor, to the current frame in operation S53. As the result of the addition, a predicted frame (or a prediction slice) is obtained.

The encoder calculates the difference between the current frame (or slice) and the predicted frame (or slice) in operation S54, and encodes the calculated difference in operation 555.

In the upper layer, no additional flag or weighting factor related to inter-layer weighted prediction needs be transmitted to the decoder. The decoder can use the flag and weighting factor of the lower layer without change.

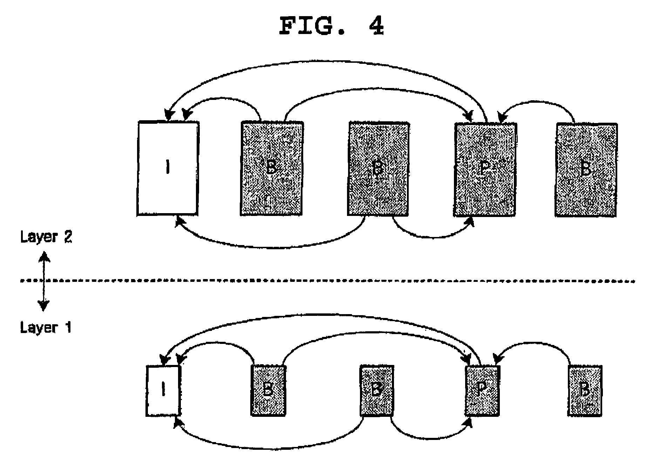

FIGS. 4 to 8 are exemplary views showing the structures of various upper and lower layers to which the present invention can be applied. Of the drawings, FIG. 4 shows the case, according to an exemplary embodiment of the present invention, where the resolution of an upper layer (layer 2) frame is twice the resolution of a lower layer (layer 1) frame, the frame rates of both layers are the same, and both layers have a single temporal level. In FIG. 4, "I" designates an I-frame (or slice), "P" designates a P-frame (or slice) and "B" designates a B-frame (or slice).

From FIG. 4, it can be seen that reference frames have the same locations with respect to respective layers because corresponding frames between the layers have the same reference method and reference distance, even though the layers have different resolutions. The current frame of the upper layer, having a corresponding base frame (a lower layer frame) having the same reference method and reference distance, can be encoded or decoded using the weighting factor of the base frame without change. As long as a frame that is not adjacent to the current frame has the same reference method, the frame may be used as the reference frame.

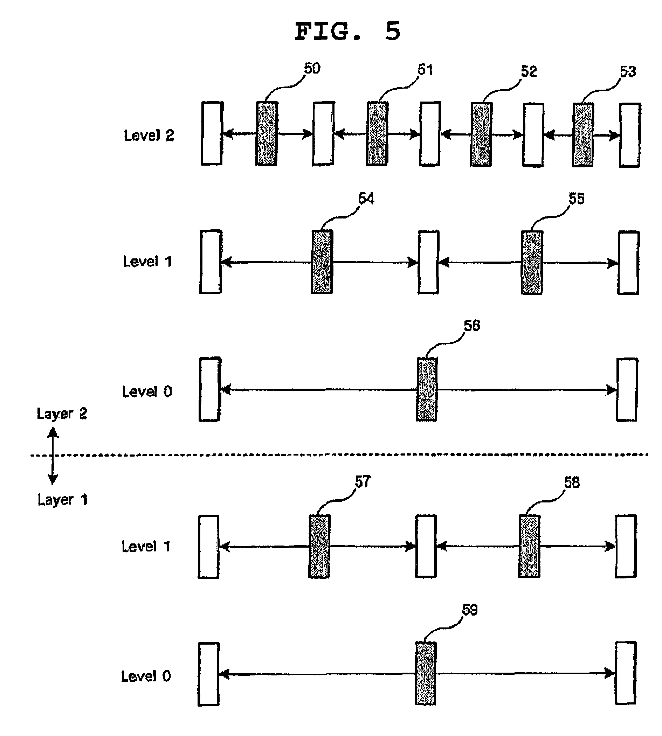

FIG. 5 shows the case, according to an exemplary embodiment of the present invention, where both the upper layer (layer 2) and the lower layer (layer 1) have an MCTF structure. Referring to FIG. 5, the frame rate of an upper layer is twice that of a lower layer. Therefore, the number of temporal levels of the upper layer is larger than that of the lower layer by one. The present invention can be applied to the case where both the upper and lower layers have hierarchical temporal-level structures. That is, the frames 54, 55 and 56 of the high-frequency frames of the upper layer that fulfill the conditions described in conjunction with FIG. 2 can be efficiently encoded or decoded respectively using the weighting factors of corresponding base frames 57, 58 and 59 without change. However, high-frequency frames 50, 51, 52 and 53 that exist only at the highest level (level 2) do not have corresponding base frames, therefore weighted prediction is not applied or the conventional weighted prediction is applied to the high-frequency frames 50, 51, 52 and 53.

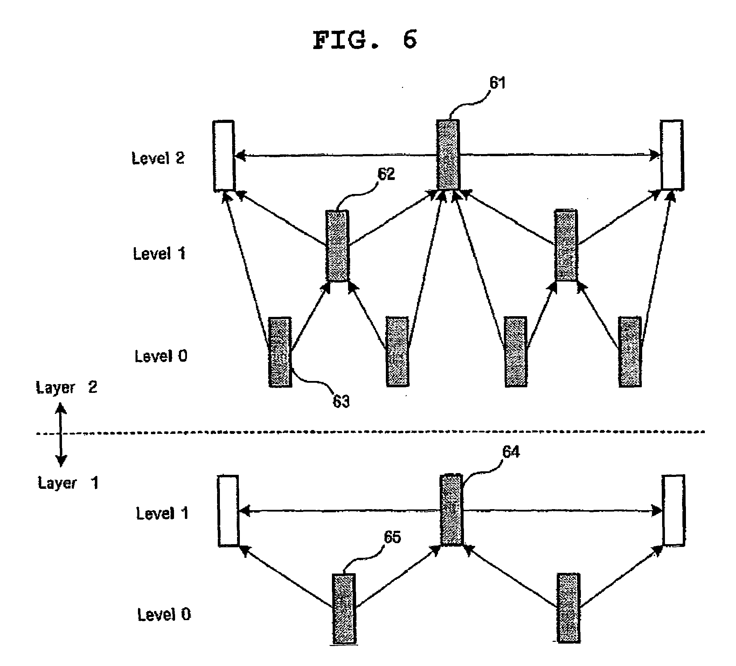

FIG. 6 shows the case, according to an exemplary embodiment of the present invention, where both the upper layer (layer 2) and the lower layer (layer 1) have the hierarchical B structures of H.264. In FIG. 6, the frame rate of the upper layer is twice that of the lower layer. In the hierarchical B structure, temporal resolution is performed differently from MCTF. That is, the lower the level, the higher the frame rate. Assuming that the frame rate of the upper layer is A, the encoder can transmit only level 2 frames if the decoder wants video having a frame rate of A/4, and can transmit only frames existing at levels 2 and 1 if the decoder wants video having a frame rate of A/2. Of course, if the decoder wants video having a frame rate of A. the encoder can transmit all of the frames.

The present invention can also be applied to the case where both upper and lower layers have hierarchical B structures. For example, a high-frequency frame 61 has the same reference method and reference distance as those of a corresponding base frame 64, and a high-frequency frame 62 has the same reference method and reference distance as those of a corresponding base frame 65. Therefore, weighted prediction can be performed on the high-frequency frames 61 and 62 using weighting factors of corresponding base frames 64 and 65 without change. In contrast, the high-frequency frame 63 does not have a corresponding base frame, and therefore weighted prediction is not applied or the conventional weighted prediction thereto.

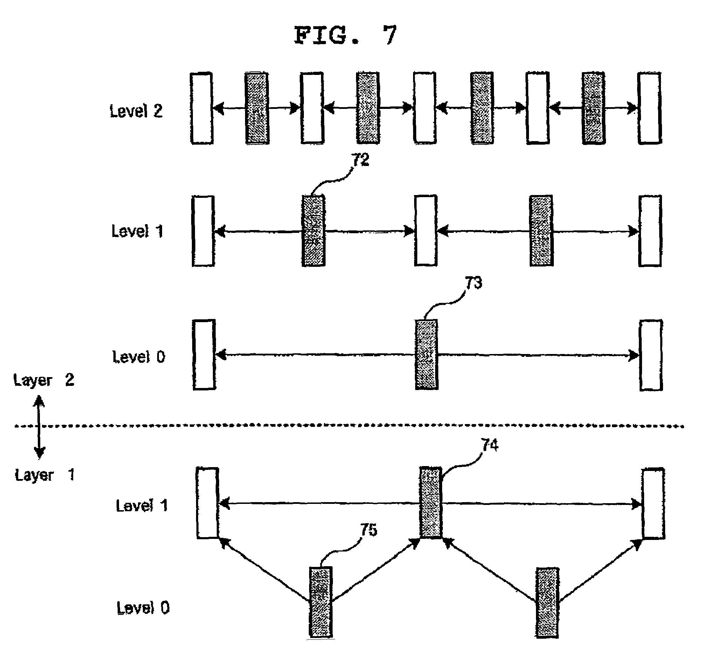

FIG. 7 illustrates the case, according to an exemplary embodiment of the present invention, where an upper layer (layer 2) has an MCTF structure and a lower layer (layer 1) has a hierarchical B structure. In this case, high-frequency frames existing at level 2 of the upper layer have no corresponding base frame, and therefore weighted prediction is not applied or the conventional weighted prediction thereto. Meanwhile, high-frequency frames existing at level 1 or level 0 have corresponding base frames. For example, the corresponding base frame of a high-frequency frame 72 is a frame 75. The frame 72 and the frame 75 are different from each other because the frame 72 is an MCTF frame while the frame 73 is a hierarchical B frame. However, as long as the frames have the same reference method and reference distance, inter-layer weighted prediction can be applied thereto without hindrance. Since the frame 72 has the same reference method and reference distance as the frame 75, inter-layer weighted prediction can be applied thereto. In the same manner, inter-layer weighted prediction can be performed on the frame 73 using the weighting factor of a frame 74 without change.

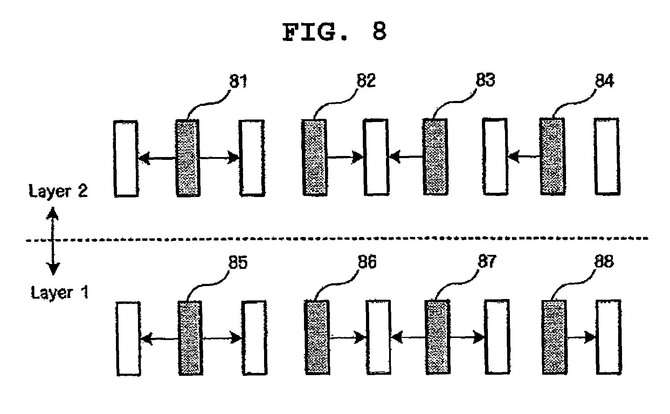

FIG. 8 illustrates the case, according to an exemplary embodiment of the present invention, where the upper and lower layer each has a single temporal level, and all of the high-frequency frames of the upper layer have corresponding base frames. However, high-frequency frames that have the same reference methods and reference distances as corresponding base frames, and high-frequency frames that do not have the same reference methods and reference distances as corresponding base frames also exist.

For example, a high-frequency frame 81 has the same reference method and distance as a corresponding base frame 85 because they have a bidirectional reference method and a reference distance of 1. A high-frequency frame 82 has the same reference method and distance as a corrcaponding base frame 86 because they have a backward reference method and a reference distance of 1. However, high-frequency frames 83 and 84 do not have the same reference methods as corresponding base frames, and therefore weighted prediction is not applied or the conventional weighted prediction thereto.

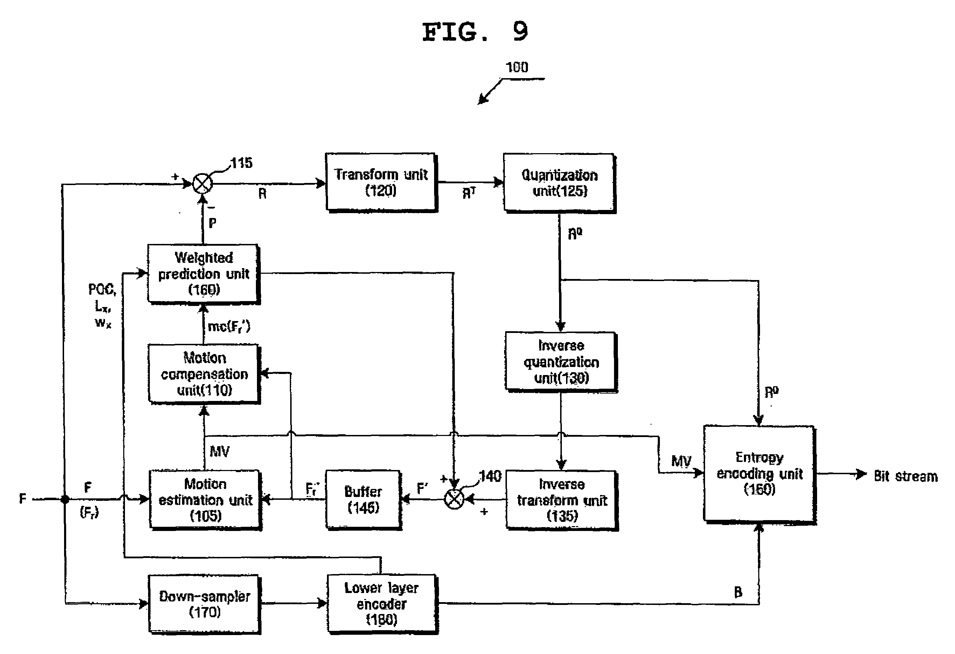

FIG. 9 is a block diagram illustrating the construction of a video encoder 100 according to an exemplary embodiment of the present invention. A current frame F is input to a motion estimation unit 105, a subtraction unit 115, and a down-sampler 1.70.

The down-sampler 170 spatially and/or temporally down-samples the current frame F and supplies the down-sampled current frame to a lower layer encoder 180. The lower layer encoder 180 receives the down-sampled current frame and outputs the encoded data B of a lower layer. The lower layer encoder 180 uses one of various types of encoding methods, and provides lower layer information, including a weighting factor, to a weighted prediction unit 160. In the exemplary embodiment of the present invention, since it is sufficient for the lower layer encoder 180 to have a function for performing encoding through the conventional weighted prediction, the encoding algorithm for the lower layer is outside the scope of the exemplary embodiment of the present invention. Therefore, the lower layer encoder 180 is represented by one module. However, since H.264, which uses weighted prediction, is used for a current single layer, the lower layer encoder 180 is preferably, but not necessarily, an H.264-based encoder.

The operation in the upper layer is described in detail below.

The motion estimation unit 105 obtains a motion vector by performing motion estimation on a current frame with reference to a reference frame at a temporal location different from that of the current frame. Meanwhile, an original image $F_r$ (for open-loop encoding) or a decoded image $F_r$· (for closed-loop encoding) can be used as the reference frame. The following description is given assuming that the video encoder 100 of the exemplary embodiment of the present invention uses the closed loop encoding method,

For the motion estimation, a block matching algorithm is widely used That is, the block matching algorithm provides a process of estimating a displacement having the lowest error as a motion vector while moving a predetennined block on a pixel or sub-pixel (1/2 pixel or 1/4 pixel) basis within a specific search region of the reference frame. Although a fixed block may be used for motion estimation, a hierarchical method based on Hierarchical Variable Size Block Matching (HVSBM) may be used.

A motion compensation unit 110 acquires a motion-compensated frame $mc(F_r')$ by performing motion compensation on the reference frame $F_r'$ using the motion vector. If there is a plurality of reference frames $F_r'$, the plurality of reference frames should be motion-compensated.

The weighted prediction unit 160 determines whether to apply inter-layer weighted prediction to the current frame according to the algorithm described with reference to FIG. 2. To this end, the weighted prediction unit 160 can receive information about the temporal location of a lower layer frame (for example, an POC), information about a reference method (for example, L0, L1), information about a reference distance (for example, an POC difference) and weighting factors (for example, $w_0$ and $w_1$).

If it is determined that the inter-layer weighted prediction should be applied, a predicted frame P for the current frame can be generated by acquiring the weighted sum of the motion-compensated reference frames $mc(F_r')$ using the weighting factors of the base frames. The term "weighted sum" refers to the multiplication of respective weighting factors and corresponding reference frames (motion-compensated reference frames) and the addition of multiplication results. When there is one reference frame, a weighting factor is simply multiplied by the reference frame.

Meanwhile if it is determined that the inter-layer weighted prediction should not be applied, the predicted frame P is generated using default values of weighting factors, that is, without using weighting factors of the base frames. Therefore, in the case of the bidirectional reference, the predicted frame P can be generated by multiplying each of the motion-compensated reference frames by 1/2 and then adding the multiplication results. In the case of the unidirectional reference, the motion-compensated reference frames can be used as the predicted frames P without change.

The subtraction unit 115 provides a residual signal R, which is calculated by subtracting the predicted frame from the current frame F, to a transform unit 120.

The transform unit 120 generates a transform coefficient $R^T$ by performing spatial transform on the residual signal R using the Discrete Cosine Transform (DCT), wavelet transform, or others. When the DCT is used, the transform coefficient is a DCT coefficient. When the wavelet transform is used, the transform coefficient is a wavelet coefficient.

Then, a quantization unit 125 quantizes the transform coefficient. The term "quantization" refers to a process of representing a transform coefficient, which is a predetermined real number, as discrete values, For example, the quantization unit 125 can perform the quantization by dividing the transform coefficient by a predetermined quantization step and rounding off the result to an integer value.

The quantization result obtained by the quantization unit 125, that is, a quantization coefficient $R^Q$, is provided to an entropy encoding unit 150 and an inverse quantization unit 130.

The inverse quantization unit 130 inversely quantizes the quantization coefficient. The inverse quantization process is a process of restoring a matching value from an index generated in the quantization process using the quantization step that was used in the quantization process.

An inverse transform unit 135 performs an inverse transform process on an inverse quantization result. The inverse transform process is performed in an inverse manner to the transform process of the transform unit 120. In more detail, the inverse DCT transform, inverse wavelet transform or others may be used. An adder 140 can generate a restored current frame F' by adding an inverse transformation result and the prediction frame P used in the motion compensation process of the motion compensation unit 110.

A buffer 145 stores a result provided by the adder 140. Therefore, the buffer 145 may store not only the restored current frame F' but also the restored reference frame $F_r'$.

The entropy encoding unit 150 losslessly encodes into a bit stream the motion vector MV estimated in the motion estimation unit 105, the quantization coefficient $R^Q$ output by the quantization unit 125, and the data B output by the lower layer encoder 180. One of various methods, such as Huffman coding, arithmetic coding and variable length coding may be used as the lossless coding method,

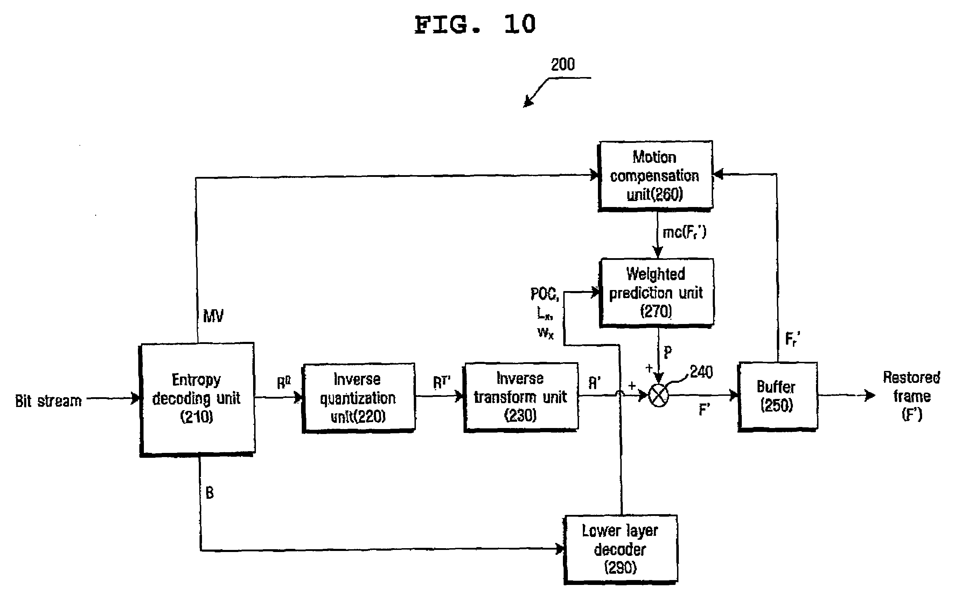

FIG. 10 is a block diagram showing the construction of a video decoder 200 according to an exemplary embodiment of the present invention.

An entropy decoding unit 210 losslessly decodes an input bit stream, and extracts the encoded data B of the lower layer, the motion vector MV of the upper layer and the texture data $R^Q$ of the upper layer. Lossless decoding is a process that is performed in a manner inverse to that of the lossless encoding process performed in the encoder.

The extracted texture data B of the lower layer is provided to a lower layer decoder 290, the extracted motion vector MV is provided to a motion compensation unit 260, and the texture data $R^Q$ is provided to an inverse quantization unit 220.

The lower layer decoder 290 uses a decoding method corresponding to method used by the lower layer encoder 180 of FIG. 9, and provides the weighted prediction unit 270 with lower layer information including the weighting factors. The lower layer information can be inserted into the bit stream, In particular, the weighting factors may be recorded in the frame header or the slice header. The lower layer decoder 290 provides the lower layer information to a weighted prediction unit 270. The lower layer decoder 290 can be an H.264-based decoder.

The inverse quantization unit 220 inversely quantizes the texture data $R^Q$. The inverse quantization process is a process of restoring a matching value from an index generated in the quantization process using a quantization table that was used in the quantization process.

An inverse transform unit 230 performs an inverse transform on an inverse quantization result. This inverse transform process is performed in an inverse manner to that of the transform process performed in the encoder. In more detail, the inverse DCT transform, inverse wavelet transform or others may be used. The residual signal R', restored as a result of the inverse transform, is sent to an adder 240.

The motion compensation unit 260 generates a motion-compensated frame me($F_r$, by performing motion compensation on the reference frame $F_r$, of the lower layer, which was previously restored and stored in a buffer 250, using the extracted motion vector MV, and sends the generated motion-compensated frame $mC(F_r')$ to the adder 240. If there is a plurality of reference frames $F_r'$, motion compensation must be performed on each of the plurality of reference frames,

The weighted prediction unit 270 determines whether to apply inter-layer weighted prediction to the current frame according to the algorithm described with reference to FIG. 2. To this end, the weighted prediction unit 270 can receive information about the temporal location of a lower layer frame (for example, an POC), information about a reference method (for example, L0, L1), information about a reference distance (for example, an POC difference) and weighting factors (for example, $\omega_0$ and $\omega_1$).

If it is determined that the inter-layer weighted prediction should be applied, a predicted frame P is generated by multiplying the motion-compensated reference frame $mc(F_r')$ by a weighting factor. Of course, if there is a plurality of reference frames, the predicted frame P can be generated by multiplying a corresponding reference frame by the weighting factor, and then adding the multiplication results.

Meanwhile, if it is determined that inter-layer weighted prediction. should not be applied, the predicted frame P is generated using a default weighting factor, that is, without using the weighting factor of the base frame. Therefore, in the case of the bidirectional reference, the predicted frame P may be generated by multiplying the motion-compensated reference frame by 1/2 and then adding the multiplication results. In the case of the unidirectional reference, the motion-compensated reference frame may be used as the predicted frame P without change.

The adder 240 adds the received R' and P and outputs the restored current frame F'. The buffer 250 temporarily stores the restored frame F'. Therefore, the buffer 250 stores not only the frame F' but also the previously stored reference frame Fr'.

Although the inter-layer weighted prediction of the upper layer through weighting factors of the lower layer has been described as being performed on a frame basis, this is only illustrative. The inter-layer weighted prediction of the upper layer can be performed on a basis identical to that (frame, slice, macroblock, motion block or the like) used in the lower layer. Although the multiple layer has been described as having two layers--an upper layer and a lower layer, this is only illustrative. Those skilled in the art will appreciate that the present invention can be applied between one layer, to which weighted prediction has already been applied, and another layer, even if three or more layers exist.

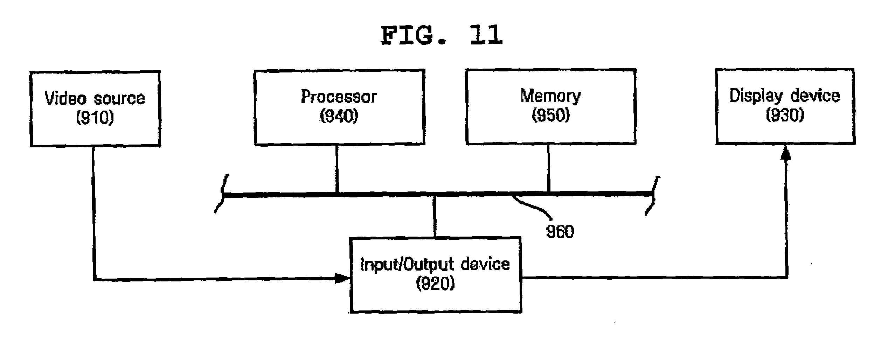

FIG. 11 is a diagram illustrating the construction of a system for implementing the video encoder 100 or the video decoder 200 according to an exemplary embodiment of the present invention, The system may be a television (TV), a set-top box, a desktop computer, a laptop computer, a palmtop computer, a Personal Digital. Assistant (PDA), or a video or image storage device (for example a Video Cassette Recorder (VCR) or a Digital Video Recorder (DVR)).

In addition, the system may be a combination of the above-described devices, or onc of the above-described devices may be included in another. The system may include at least one video source 910, at least one Input/Output (I/O) device 920, a processor 940, a memory 950 and a display device 930.

The video source 910 may be a TV receiver, a VCR or another type of video storage device. Furthermore, the video source 910 may be at least one network connection for receiving video from a server via the Internet, a Wide Area Network (WAN), a Local Area Network (LAN), a terrestrial broadcasting system, a cable network, a satellite communication network, a wireless network, a telephone network or the like, In addition, the video source may be a combination of the above-described networks, or one of the above-described networks may be included in another.

The I/O device 920, the processor 940 and the memory 950 communicate with each other via a communication medium 960. The communication medium 960 may be a communication bus, a communication network, or at least one internal connection circuit Input video data received from the video source 910 may be processed by the processor 940 in accordance with at least one software program stored in the memory 950, and may be executed by the processor 94.0 so as to generate output video that is provided to the display device 930.

In particular, the software program stored in the memory 950 may include a multi-layer based video codec that performs the method according to the foregoing exemplary embodiments of the present invention. The codec may be stored in the memory 950, may be read from a storage medium such as a CD-ROM or a floppy disk, or may be downloaded from a predetermined server via one of various networks. The codec may be entirely software based, entirely hardware based, or a combination of software and a hardware circuit. As described above, in accordance with the video encoder/decoder according to the exemplary embodiments of the present invention, the weighting factor of a corresponding base frame can be used without change. Therefore, weighted prediction can be efficiently performed on the frames of an enhanced layer without transferring additional information to the decoder.

It is possible to further improve the coding efficiency of video data through weighted prediction.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise, Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed,

**Claims**

1. A video encoding method for performing weighted prediction on a current image in a first layer using at least one weighting factor of a corresponding image in a second layer, the video encoding method comprising operations of:
   (a) reading the at least one weighting factor;

   (b) performing motion compensation on at least one reference image for the current image based on a corresponding motion vector;
   (c) generating a predicted image for the current image by acquiring a weighted sum of the at least one motion-compensated reference image using the at least one weighting factor; and(d) encoding a difference between the current image and the predicted image.

2. The video encoding method as set forth in claim 1, wherein operation (c) is performed without using the at least one weighting factor if a current frame in the first layer comprising the current image is not a synchronized frame.

3. The video encoding method as set forth in claim 2 or claim 3, wherein the current frame is determined to be a. synchronized frame if a Picture Order Count (POC) of a corresponding frame, comprising the corresponding image, in the second layer is identical to that of the current frame.

4. The video encoding method as set forth in claim 2, wherein operation (c) is performed without using the at least one weighting factor if a reference method and a reference distance of the current frame arc not identical to those of the corresponding frame in the second layer.

5. The video encoding method as set forth in claim 4, wherein the reference distance is a difference between an POC of the corresponding frame and an POC of a reference frame of the corresponding frame, wherein the reference frame is a frame in the second layer used to predict the corresponding image for encoding the corresponding image.

6. The video encoding method as set forth in any preceding claim, wherein a unit of the current image is at least one of frame, slice, macroblock or motion block,

7. The video encoding method as set forth in any preceding claim, wherein operation (a) comprises examining a predetermined flag of the corresponding image.

8. The video encoding method as set forth in claim 7, wherein the predetermined flag is recorded in a header of the corresponding image.

9. The video encoding method as set forth in any preceding claim, wherein operation (c) comprises:

if there is one motion-compensated reference image, multiplying the at least one weighting factor by the one motion-compensated reference image; and
if there are two or more motion-compensated reference images, multiplying the at least one weighting factor and the motion-compensated reference images and adding the multiplication results.

10. A video decoding method for performing weighted prediction on a current image in a first layer using at least one weighting factor of a corresponding image in a second layer, the video decoding method comprising operations of:

(a) extracting texture data of the current image in the first layer, at least one motion vector and the at least one weighting factor from an input bit stream;
(b) performing motion compensation on at least one reference image for the current image based on a corresponding motion vector among the at least one motion vector;
(c) generating a predicted image for the current image by acquiring a weighted sum of the at least one motion-compensated reference image using the at least one weighting factor; and
(d) adding the texture data of the current image and the predicted image.

11. The video decoding method as set forth in claim 10, wherein operation (c) is performed without using the at least one weighting factor if a current frame in the first layer comprising the current image is not a synchronized frame.

12. The video decoding method as set forth in claim 11, wherein the current frame is determined to be a synchronized frame if a Picture Order Count (POC) of a corresponding frame, comprising the corresponding image, in the second layer, is identical to that of the current frame.

13. The video decoding method as set forth in claim 11 ar claim 12, wherein operation (c) is performed without using the at least one weighting factor if a reference method and a reference distance of the current frame are not identical to those of the corresponding frame in the second layer.

14. The video decoding method as set forth in claim 13, wherein the reference distance is a difference between an POC of the corresponding frame and an POC of a reference frame of the corresponding frame, wherein the reference frame is a frame in the second layer used to predict the corresponding image for encoding the corresponding image.

15. The video decoding method as set forth in any one of claims 10-14, wherein the texture data of operation (d) is a result that is obtained by inversely quantizing and then inversely transforming the texture data of operation (a).

16. The video encoding method as set forth in any one of claims 10-15, wherein a unit of the current image is at least one of frame, slice, macroblock or motion block.

17. The video encoding method as set forth in any one of claims 10-16, wherein operation (a) comprises examining a predetermined flag of the corresponding image.

**18.** The video encoding method as set forth in claim 17, wherein the predetermined flag is recorded in a header of the corresponding image.

**19.** A video encoder (100) comprising:

a motion estimation unit (105) which acquires at least one motion vector by performing motion estimation on a current image of a first layer with reference to at least one reference image at a temporal location different from that of the current image;
a motion compensation unit (110) which performs motion compensation on the at least one reference image using the at least one motion vector;
a weighted prediction unit (160) which generates a predicted image for the current image by acquiring a weighted sum of the at least one motion-compensated reference image using at least one weighting factor which is used for encoding a temporally corresponding image in a second layer; and
a unit which encodes a difference between the current image and the predicted image.

**20.** A video decoder (200) comprising:

an entropy decoding unit (210) which extracts texture data of a current image of a first layer, at least one motion vector and at least one weighting factor of a temporally corresponding image in a second layer from an input bit stream;
a motion compensation unit (260) which performs motion compensation on at least one reference image for the current image using the at least one motion vector;
a weighted prediction unit (270) which generates a predicted image for the current image by acquiring a weighted sum of the at least one motion-compensated reference image using the at least one weighting factor; and
an adder (240) which adds texture data of the current image and the prediction image.

FIG. 1

EP 1 737 243 A2

# FIG. 2

```
                        ┌─────────────┐
                        │    Start    │
                        └─────────────┘
                               │
                               ▼
                ┌──────────────────────────────┐
                │ Input current frame of upper layer │ ─── S10
                └──────────────────────────────┘
                               │
                               ▼
                      ╱───────────────╲
                     ╱  Is current frame ╲              No
                     ╲ synchronized frame? ╱ ─── S20 ──────────────┐
                      ╲───────────────╱                            │
                               │ Yes                               │
                               ▼                                   │
                      ╱───────────────────╲                        │
                     ╱    Are reference     ╲                      │
                    ╱ method and reference distance of ╲   No      │
                    ╲ current frame identical to those of ╱ ── S30 ──┤
                     ╲       base frame?      ╱                      │
                      ╲───────────────────╱                         │
                               │ Yes                                │
                               ▼                                    │
                      ╱───────────────╲                             │
                     ╱       Is         ╲          No               │
                    ╱ weighted prediction used ╲ ── S40 ────────────┤
                     ╲ for reference frame?   ╱                     │
                      ╲───────────────╱                             │
                               │ Yes                                │
                               ▼                                    ▼
              ┌──────────────────────────┐    ┌──────────────────────────┐
              │ Apply weighted prediction to │ S50 │ Do not apply weighted prediction to │ S60
              │      current frame        │    │      current frame        │
              └──────────────────────────┘    └──────────────────────────┘
                               │                         │
                               ▼◄────────────────────────┘
                        ┌─────────────┐
                        │     End     │
                        └─────────────┘
```

EP 1 737 243 A2

# FIG. 3

Start

Read weighting factors $w_0$ and/or $w_1$ of base frame — S51

Perform motion compensation on reference frame for current frame based on motion vector — S52

Generate predicted frame by multiplying motion-compensated reference frame by weighting factors $w_0$ and/or $w_1$ — S53

Calculate difference between current frame and predicted frame — S54

Encode difference — S55

End

# FIG. 4

Layer 2

Layer 1

# FIG. 5

FIG. 6

EP 1 737 243 A2

# FIG. 7

FIG. 8

81  82  83  84

Layer 2

85  86  87  88

Layer 1

# FIG. 9

100

EP 1 737 243 A2

FIG. 10

# FIG. 11

EP 1 737 243 A2